# EUROPEAN PATENT SPECIFICATION

(11) **EP 4 111 120 B1**
(45) Date of publication and mention of the grant of the patent: **01.01.2025**
(21) Application number: 21716250.2
(22) Date of filing: 16.02.2021
(51) Int. Cl.: B22D 1/00, F27B 3/04, F27B 3/22, F27B 19/04, F27D 3/14, F27D 3/16, F27D 27/00, B22D 27/02, B22D 35/00

(54) **MULTI-PURPOSE PUMP SYSTEM FOR A METAL FURNACE AND RELATED METHOD**
MEHRZWECKPUMPENSYSTEM FÜR EINEN METALLOFEN UND ZUGEHÖRIGE VERFAHREN
SYSTÈME DE POMPE POLYVALENTE POUR FOUR MÉTALLIQUE ET PROCÉDÉ ASSOCIÉ

(30) Priority: 25.02.2020 US 202062981282 P
(43) Date of publication of application: 04.01.2023
(73) Proprietor: Novelis, Inc., Atlanta, GA 30326 (US)
(72) Inventor: OPDENDRIES, Brent, Post Falls, Idaho 83854 (US); PARDESHI, Ravindra Tarachand, Kennesaw, Georgia 30144 (US); JACKSON, Sean, Liberty Lake, WA 99019 (US)
(74) Representative: Weickmann & Weickmann PartmbB
(86) International application number: PCT/US2021/070157
(87) International publication number: WO 2021/174241

(56) References cited:
- EP-A1- 1 612 498
- EP-A2- 2 206 998
- EP-A2- 2 821 162
- WO-A1-2017/044587
- JP-A- 2008 196 807
- KR-B1- 102 079 388
- US-A1- 2011 163 486

## Description

### REFERENCE TO RELATED APPLICATION

This application claims the benefit of U.S. Provisional Application No. 62/981,282, filed on February 25, 2020 and entitled MULTI-PURPOSE PUMP SYSTEM FOR A METAL FURNACE AND RELATED METHODS.

### FIELD OF THE INVENTION

This invention relates to a pump system for metal furnaces and related method.

### BACKGROUND

A typical metal furnace includes an enclosed main chamber that holds a molten material, such as molten metal, and includes heating elements that produce enough heat to maintain the molten condition. The molten material may be poured into a casting machine to produce a metal ingot. In some cases, a charging well and a separate pump with a pumping well are in fluid communication with the main chamber. The pump typically includes a component that directly contacts the molten material to circulate the molten material. In particular, the pump may draw the molten material from the main chamber of the metal furnace and then force the molten material into the charging well and back into the main chamber of the metal furnace. Metal scrap may be introduced into the molten material in the charging well where the scrap melts and becomes part of the molten material. It is common for the charging well to include an impeller, which rotates in the charging well to promote mixing and submergence of scrap that is introduced into the molten material. A separate dross well may be provided between the charging well and the main chamber, and dross may be collected from the upper surface of the molten material in the dross well before it is recirculated to the main chamber. Document EP 2 206 998 A2 which is the closest prior art discloses a pump system for a metal furnace according to the preamble of claim 1. Document JP 2008 196807 A discloses a pump system for a metal furnace comprising a tank which comprises a tank chamber configured to receive a molten material, and a mixer which is fixedly positioned within the tank chamber. Furthermore, reference is made to documents EP 2 821 162 A2, EP 1 612 498 A1, WO 2017/044587 A1, KR 102 079 388 B1 and US 2011/163486 A1.

### SUMMARY

It is an object of the present invention to provide an improved pump system for a metal furnace as well as a corresponding method. According to the invention, this object is solved by the subject matter of claims 1 and 4. Embodiments covered by this patent are defined by the claims below, not this summary. This summary is a high-level overview of various embodiments and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

According to certain embodiments, a pump system for a metal furnace includes a tank and a magnetic stirrer. The tank includes a tank chamber that is configured to receive a fluid, such as a molten material. The tank is positioned above the magnetic stirrer and such that the magnetic stirrer is outside of the tank chamber. The magnetic stirrer includes a rotating permanent magnet, and the magnetic stirrer is configured to generate a moving magnetic field in the molten material in the tank chamber to induce movement in the molten material.

According to the invention, a pump system for a metal furnace includes a tank that includes a tank chamber, an inlet, and an outlet. The tank chamber is configured to receive a fluid, such as a molten material. The inlet is in fluid communication with the tank chamber and defines a flow path to the tank chamber for molten material entering the tank chamber. The outlet is in fluid communication with the tank chamber and defines a flow path from the tank chamber for molten material exiting the tank chamber. A transverse dimension of the tank chamber proximate to the inlet is different from the transverse dimension of the tank chamber proximate to the outlet.

According to the invention, a pump system for a metal furnace includes a tank and a mixer. The tank includes a tank chamber that is configured to receive a fluid, such as a molten material. The mixer is selectively positionable within and removable from the tank chamber, and the mixer includes a body that includes one or more fins along an edge of the body.

According to the invention, a pump system for a metal furnace includes a tank and a mixer. The tank includes a tank chamber that is configured to receive a fluid, such as a molten material. The mixer is selectively positionable within and removable from the tank chamber. According to some embodiments the mixer includes a body, the body that defines a supply passageway having at least one opening along a vertical edge of the body. The mixer is configured to selectively supply an injectable material into the tank chamber via the supply passageway and the at least one opening.

According to certain embodiments, a mixer for a pump system for a metal furnace includes a body with an edge extending along a length of the body, at least one fin along the edge of the body, and a supply passageway extending at least partially through the body and that includes at least one opening defined in the edge of the body.

According to various embodiments, a method includes receiving, from a furnace, molten material in a tank chamber of a tank of a pump system. The method also includes generating a mixing flow in the molten material in the tank chamber. In some examples, generating the mixing flow includes rotating a permanent magnet of a magnetic stirrer of the pump system to generate a moving magnetic field in the molten material in the tank chamber, and controlling the moving magnetic field to induce movement in the molten material. The method may include discharging the molten material from the tank.

Various implementations described herein can include additional systems, methods, features, and advantages, which cannot necessarily be expressly disclosed herein but will be apparent to one of ordinary skill in the art upon examination of the following detailed description and accompanying drawings. It is intended that all such systems, methods, features, and advantages be included within the present disclosure and protected by the accompanying claims.

### BRIEF DESCRIPTION OF THE DRAWINGS

The specification makes reference to the following appended figures, in which use of like reference numerals in different figures is intended to illustrate like or analogous components.
FIG. 1 is a diagram of a metal melting system with a metal furnace and a pump system according to embodiments of the disclosure.
FIG. 2 is a perspective view of a pump system for a metal melting system according to embodiments of the disclosure.
FIG. 3 is another perspective view of the pump system of FIG. 2.
FIG. 4 is an exploded assembly view of the pump system of FIG. 2.
FIG. 5 is a perspective view of a tank of the pump system of FIG. 2.
FIG. 6 is a sectional view of the tank of the pump system of FIG. 2.
FIG. 7 is a sectional view of a mixer of a mixing system of the pump system of FIG. 2.
FIG. 8 is a side view of a tank and magnetic stirrer of a pump system according to embodiments of the disclosure.
FIG. 9 is a perspective view of the tank of the pump system of FIG. 8.
FIG. 10 is a perspective view of a pump system according to embodiments of the disclosure.
FIG. 11 is another perspective view of the pump system of FIG. 10.
FIG. 12 is a schematic view of a sidewell melting furnace with a pump system according to embodiments of the disclosure.
FIG. 13 is a schematic view of a dual chamber furnace with a pump system according to embodiments of the disclosure.
FIG. 14 is another schematic of the dual chamber furnace with the pump system of FIG. 13.

### DETAILED DESCRIPTION

It should be noted that the embodiments of the present disclosure is for the explanation of the present disclosure, and not for the limitation of the present invention. The scope of the present invention is defined in the appended claims. Directional references such as "up," "down," "top," "bottom," "left," "right," "front," and "back," among others, are intended to refer to the orientation as illustrated and described in the figure (or figures) to which the components and directions are referencing.

In the present invention, a "transverse dimension" refers to the dimension across the widest portion of the component. It will be appreciated that the transverse dimension may depend on a shape of the component. A diameter of an object is an example of a transverse dimension. As such, while the description below may reference diameters, it will be appreciated that the shape of the tank chamber and/or the components of the pump system is not considered limiting.

Described herein are pump systems for a metal furnace and associated methods. In certain aspects, the pump system may be utilized in a melting system for melting various metals, and may be particularly suited for melting systems for melting aluminum. In some examples, the pump system may be utilized with a recycling melting furnace, including but not limited to a sidewell melting furnace or a dual chamber melting furnace. Such recycling melting furnaces may be designed to handle different forms of scrap (e.g., light gauge, medium gauge, and heavy gauge). The pump system described herein may improve mixing and melting of metal scrap by improving the submergence of metal scrap in molten material. The pump system may also improve the mixing of additives (e.g., salt) into the molten material during the melting by improving the submergence of such additives in the molten material.

The pump system may include a tank and a magnetic stirrer. The tank includes a tank chamber, and a molten material, such as molten metal, may be retained within and pumped through the tank chamber. The magnetic stirrer includes a rotating permanent magnet, and the tank is positioned above the magnetic stirrer such that a moving magnetic field generated by the rotating permanent magnet induces movement in the molten material in the tank chamber of the tank.

The pump system also includes a mixer assembly that includes at least one mixer that is selectively positionable within and removable from the tank chamber for certain processes of the pump system. The mixer has a body with at least one fin along an edge of the mixer that may generate a flow rotation within the molten material when the mixer is lowered into the tank chamber. The mixer may also include a supply passageway that is at least partially defined within the body and that may be used to supply an injectable material, such as salt, into the tank chamber when the mixer is lowered into the tank chamber. In some examples, the mixer may be in a lowered position (or at least partially positioned within the tank chamber) for some processes of the pump system and may be in a raised position (or outside of the tank chamber) for other processes of the pump system. As some non-limiting examples, the mixer may be in the raised position for processes such as dross collection and/or some pumping processes, and the mixer may be in the lowered position for processes such as metal addition and/or salt injection. In other examples, the mixer may be in the raised position and/or the lowered position as desired.

The pump system described herein may allow for multiple processes to be performed with the same pump system, thereby providing a more compact system that can be used with metal furnaces and/or more easily retrofit into existing metal melting systems. The pump system may also omit moving parts in the molten material during certain processes (e.g., during certain pumping processes, salt injection, scrap addition, etc.).

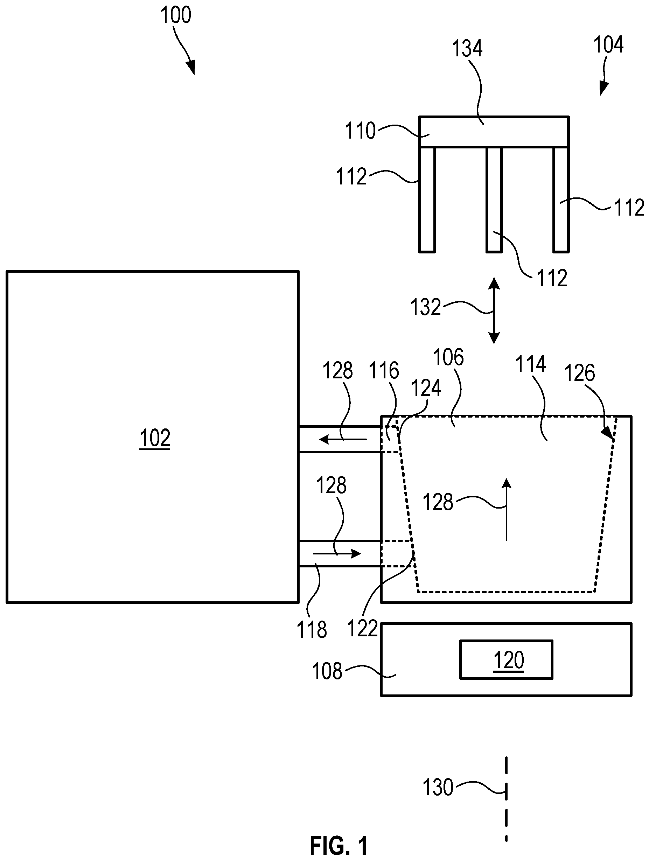

FIG. 1 illustrates an example of a furnace system 100 that includes a metal furnace 102 and a pump system 104 according to various embodiments. The metal furnace 102 may heat and contain a source of molten material, such as molten metal (e.g., molten aluminum). The metal furnace 102 may be various types of metal furnaces including, but not limited to, a sidewell melting furnace, a dual chamber furnace, etc. Molten metal from the metal furnace 102 may be used to produce a metal ingot through various casting techniques.

The pump system 104 includes a tank 106, a magnetic stirrer 108, and a mixer assembly 110. The tank 106 includes a tank chamber 114 that is in fluid communication with the metal furnace 102 by an inlet conduit 116 and an outlet conduit 118 such that molten material may be supplied to the tank 106 via the inlet conduit 116 and removed from the tank 106 via the outlet conduit 118. In various examples, an inlet 122 of the tank chamber 114 is at a vertical position that is below a vertical position of an outlet 124 of the tank chamber 114 such that molten material is pumped in an upwards direction within the tank chamber 114.

The tank chamber 114 has a chamber wall 126. In the present invention, a transverse dimension, such as a diameter, of the chamber wall 126 proximate to an inlet 122 of the tank chamber 114 is different from the transverse dimension of the chamber wall 126 proximate to an outlet 124 of the tank chamber 114. In the example of FIG. 1, the transverse dimension of the chamber wall 126 proximate to the inlet 122 is less than the transverse dimension of the chamber wall 126 proximate to the outlet 124. In certain aspects, the tank chamber 114 having at least two different transverse dimensions may guide and/or improve movement of the molten material through the tank chamber 114. The chamber wall 126 having at least two different transverse dimensions may also shape an upper surface of the molten material within the tank chamber 114 (e.g., to have a conical shape) at certain pumping speeds to form a collection point for dross and facilitate removal of dross. In some examples, at certain pumping speeds, the chamber wall 126 shapes the molten material such that a collection point is formed in a top surface of the molten material within the tank chamber 114 for dross and facilitate removal of dross. The collection point may facilitate removal of dross with a dross removal device (such as, but not limited to, a robotic arm, an Archimedes screw type assembly, etc.). The chamber wall 126 may also provide better scrap submergence within the tank chamber 114 because the chamber wall 126 may generate a vortex in the molten material, which may lead to scrap being submerged within the melt and not on the melt surface. The chamber wall 126 may also promote mixing during mixing processes (e.g., salt injection) because the vortex generated by the chamber wall 126 may submerge the added material (e.g., salt) below the melt surface, which may minimize or reduce salt loss entrapment on the melt surface and lead to lower salt consumption. The chamber wall 126 may also optionally allow for pumping of the molten material without requiring drain plugs near the drain hole due to the improved mixing in the molten material, thereby reducing the safety hazard otherwise associated with drain plugs. While the profile of the chamber wall 126 is illustrated as linear in FIG. 1, it need not be in other examples, and the particular profile of the chamber wall 126 should not be considered limiting. The geometry of the chamber wall 126 may be selected to improve flow of the molten metal within the tank chamber 114 and/or to ensure the molten metal climbs up the chamber wall 126 to be discharged out the outlet 124.

The magnetic stirrer 108 includes a permanent magnet 120 that is rotatable about an axis such that the permanent magnet 120 generates a moving magnetic field. In the example of FIG. 1, the permanent magnet 120 is rotatable about a vertical axis 130 of the tank chamber 114, although in other examples the permanent magnet 120 may be rotatable about any axis as desired. While a single permanent magnet 120 is illustrated, in other examples, the magnetic stirrer 108 may include a plurality of permanent magnets 120 that are each rotatable about an axis. In various examples, the tank 106 is supported above the magnetic stirrer 108 such that the moving magnetic field generated by the rotating permanent magnet 120 induces movement in the molten material in the tank chamber 114, thereby pumping the molten material through the tank chamber 114 along a flow path (represented by arrows 128) and recirculating the molten material back to the metal furnace 102.

The mixer assembly 110 includes at least one mixer 112 and is movable (represented by arrow 132) between a lowered position and a raised position. In various examples, in the lowered position, the at least one mixer 112 may be positioned at least partially within the tank chamber 114 and/or at least partially within the molten metal within the tank chamber 114, and, in the raised position, the at least one mixer 112 may be positioned above the molten metal within the tank chamber 114 and/or outside of the tank chamber 114. In certain cases, the mixer assembly 110 may be in the raised position or the lowered position depending on a process of the pump system 104. As some non-limiting examples, the mixer assembly 110 may be in the raised position for certain pumping and/or dross collection processes and may be in the lowered position for certain scrap addition or mixing processes (e.g., salt injection).

The mixer assembly 110 may include any number of mixers 112 as desired, so while three mixers 112 are illustrated in FIG. 1, the number of mixers 112 should not be considered limiting. When a plurality of mixers 112 are included, the mixers 112 may be interconnected through or integrally formed with a common base 134 such that the mixers 112 are movable together between the raised position and the lowered position. In other examples, each mixer 112 may be independently movable relative to another mixer 112 between the raised position and the lowered positions.

The mixers 112 may be at various angles relative to the vertical axis 130 of the tank chamber 114. In various aspects, the angle of the mixers 112 relative to the vertical axis 130 may at least partially control a rotational flow characteristic of the molten material within the tank chamber 114. In the example of FIG. 1, the mixers 112 are substantially parallel to the vertical axis 130, although they need not be substantially parallel to the vertical axis 130 in other examples. As some non-limiting examples, in other cases, one or more of the mixers 112 may be at an angle of about 15°, about 30°, about 45°, about 60°, etc. relative to the vertical axis 130. When a plurality of mixers 112 are utilized, the angle of one mixer 112 relative to the vertical axis 130 may be the same as or different from the angle of another mixer 112 relative to the vertical axis 130. In some cases, the mixers 112 may be fixed at their respective angles relative to the vertical axis 130; however, in other examples, one or more mixers 112 may be adjustable such that the mixers 112 can be positioned at an angle relative to the vertical axis 130 as desired.

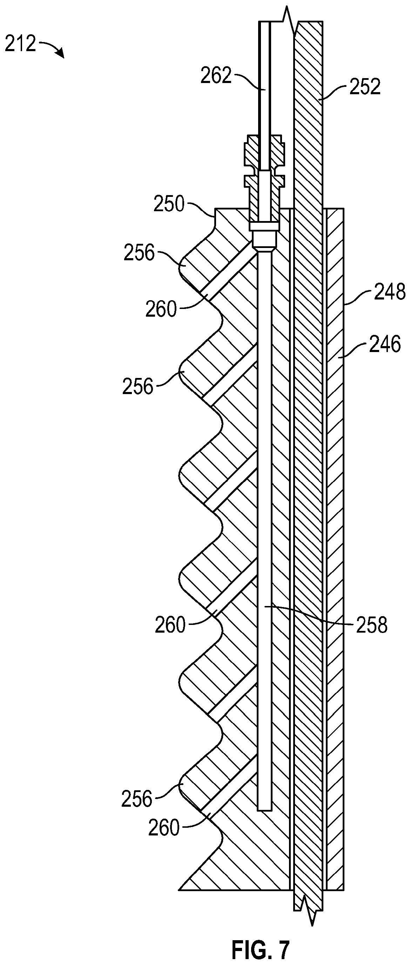

As discussed in greater detail below with reference to FIG. 7, each mixer 112 may have a supply passageway that may be used to add various injectable materials (e.g., salt) into the molten material in the tank chamber 114. In various examples, the mixers 112 with the supply passageway may allow for the injectable material to be added below the melt surface of the molten material, which may minimize salt loss entrapment on the metal surface and lead to lower salt consumption. Additionally or alternatively, and as also discussed in greater detail below with reference to FIG. 7, each mixer 112 may have one or more fins along an edge of the mixer 112 to generate rotational flow within the molten material. In various examples, the mixers 112 in the lowered position may maintain their general position within the tank chamber 114 (e.g., they may be stationary within the tank chamber 114). As discussed in greater detail below, molten material flowing within the tank chamber 114 (e.g., by the magnetic stirrer 108) may flow around the mixers 112, and the flow of the molten material around the mixers 112 may generate additional rotational flow within the molten metal.

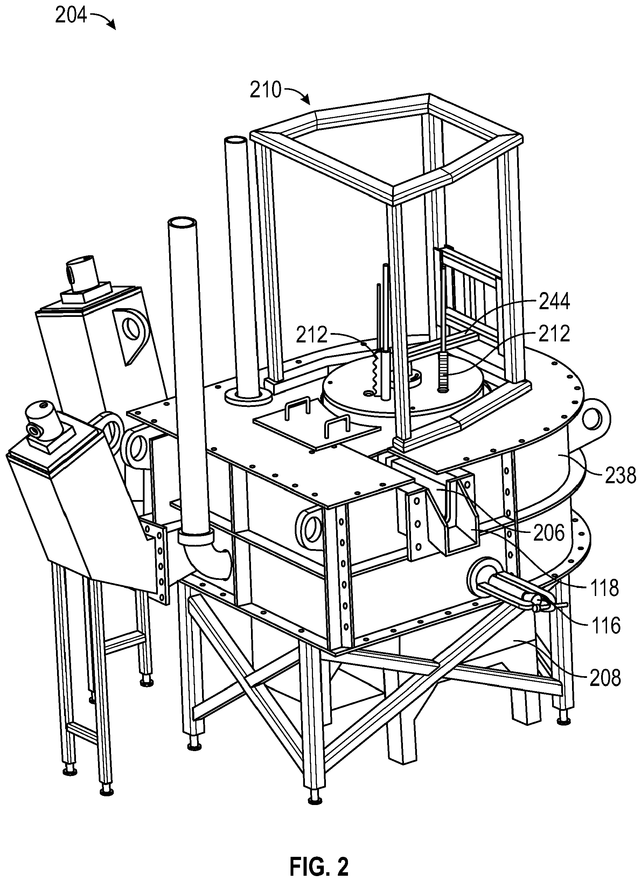

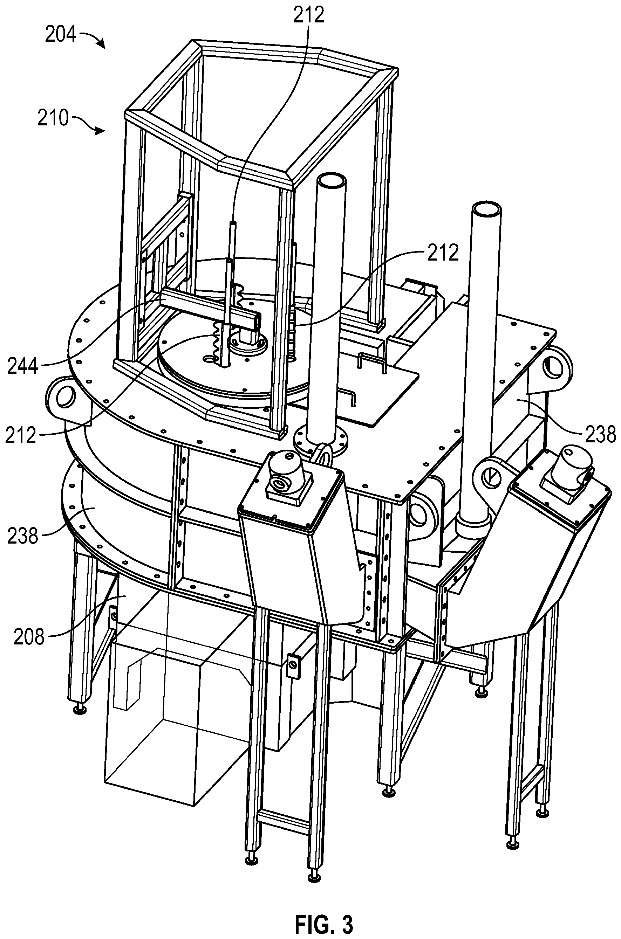

FIGS. 2-7 illustrate another example of a pump system 204 according to various embodiments. The pump system 204 is substantially similar to the pump system 104 and includes a tank 206, a magnetic stirrer 208, and a mixer assembly 210.

The magnetic stirrer 208 is substantially similar to the magnetic stirrer and includes a rotatable permanent magnet (not visible in the views illustrated).

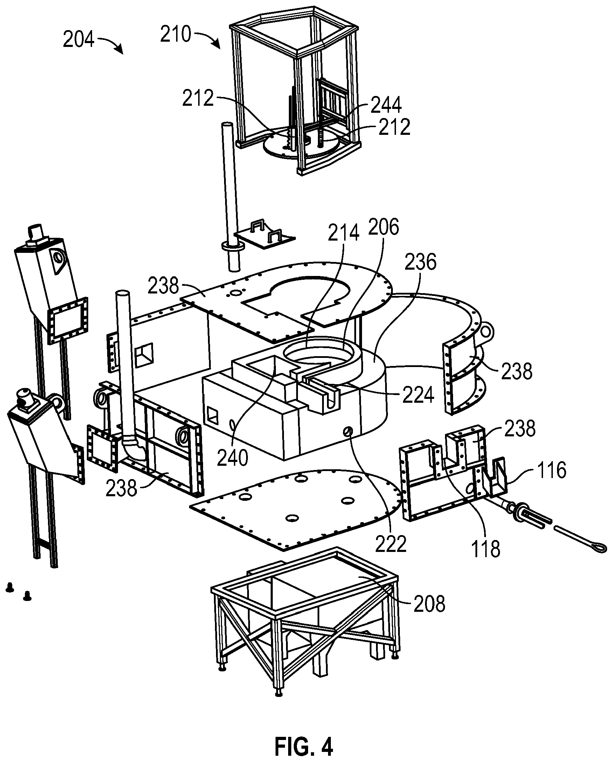

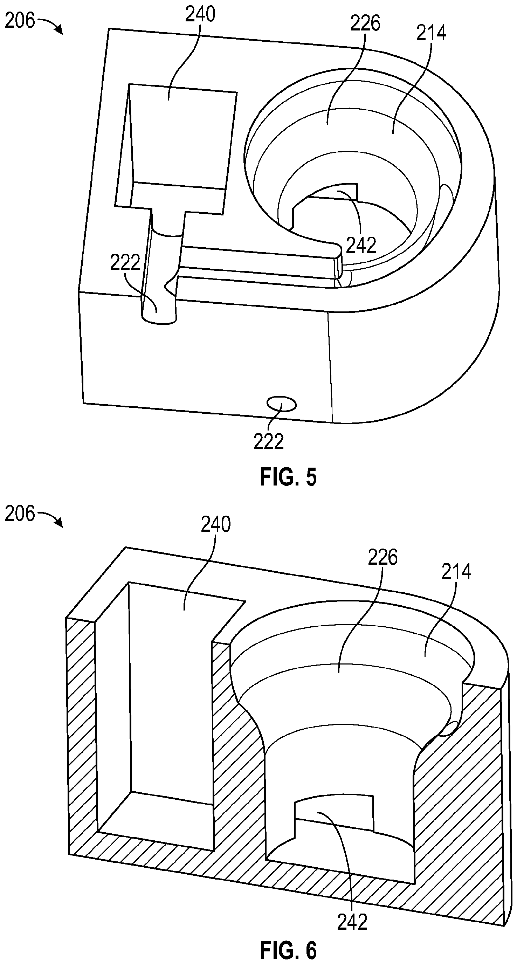

As best illustrated in FIG. 4, a refractory material 236 may support the tank 206, and various covering materials 238 (e.g., steel plates or other suitable material) may enclose the tank 206 and refractory material 236. As best illustrated in FIGS. 5 and 6, the profile of a chamber wall 226 of the tank chamber 214 is different from the profile of the chamber wall 126 of FIG. 1 and is non-linear between the portion of the chamber wall 226 proximate to an inlet 222 and the portion of the chamber wall 226 proximate to an outlet 224. Similar to the tank chamber 114, a transverse dimension of the tank chamber 214 proximate to the inlet 222 is less than the transverse dimension of the tank chamber 214 proximate to the outlet 224. In various examples, the tank chamber 214 with the reduced transverse dimension proximate to the inlet 222 may promote and/or improve the flow of the molten material through the tank chamber 214 from the inlet 222 to the outlet 224. As mentioned, the geometry of the chamber wall of the tank chamber 214 may be selected to improve flow of the molten metal within the tank chamber 214 and/or to ensure the molten metal climbs up the chamber wall to be discharged out the outlet. The geometry of the chamber wall of the tank chamber 214 may generate a vortex in the molten material, which may improve scrap submergence inside the melt, improve the flow of molten metal through the tank (e.g., improved pumping), improve mixing of the molten material within the tank chamber (and reducing metal solidification within the tank chamber), and/or improve mixing of scrap and/or other injectable material in the melt.

Compared to the tank 106, the tank 206 also includes a supplemental chamber 240 that is in fluid communication with the outlet 224 of the tank chamber 214 and a supplemental inlet 242 of the tank chamber 214. In certain optional examples, at least some of the molten material exiting the tank chamber 214 may be diverted to the supplemental chamber 240 and recirculated back into the tank chamber 214 via the supplemental inlet 242. In other examples, the supplemental chamber 240 may be omitted.

As best illustrated in FIGS. 2-4 and 7, similar to the mixer assembly 110, the mixer assembly 210 includes three mixers 212. Each of the mixers 212 includes a body 246 that is optionally supported on a support 252. In various examples, the body 246 is movable along the support 252 such that the mixer 212 is movable between the lowered position and the raised position, although in other examples, the body 246 is fixed relative to the support 252 (i.e., not movable). In the example illustrated, the body 246 is fixed relative to the support 252. In other examples, the support 252 may be omitted and various other suitable devices or mechanisms may be utilized to support and/or position the body 246 as desired. The body 246 has a first edge 248 and a second edge 250 opposite from the first edge 248. The first edge 248 and the second edge 250 may extend along a length of the body 246.

As best illustrated in FIG. 7, in various examples, the second edge 250 may include one or more fins 256. The fins 256 may be integrally formed with the body 246 or may be separate components that are coupled to the body 246 through various suitable mechanisms. In the example of FIG. 7, the second edge 250 includes seven fins 256, although the number of fins 256 should not be considered limiting. Similarly, the shape, profile, or pattern of the fins 256 should not be considered limiting. When the mixer 212 is lowered into the molten material in the tank chamber 214, the fins 256 may generate turbulence and/or a rotational flow in the molten material, thereby providing increased mixing and/or pumping of the molten metal flowing through the tank chamber 214. In various aspects, rotational flow generated by the fins 256 may be controlled by controlling one or more of the number of fins 256 on the mixer 212, the profile or pattern of the fins 256, the number of mixers 212 with the mixer assembly 210, the angle of the mixer 212 relative to the vertical axis of the tank chamber 214, the orientation of the second edge 250 with the fins 256 relative to the vertical axis (e.g., the second edge 250 faces radially inwards, radially outwards, in a clockwise circumferential direction, in a counter-clockwise circumferential direction, etc.), or other features of the mixer assembly 210.

Additionally or alternatively, each mixer 212 may include a supply passageway 258 that extends at least partially through the body 246 and is in fluid communication with one or more openings 260 that are defined by the body 246. In various examples, the openings 260 may be defined in edges or sides of the body 246 that are not a leading edge or side in the flow of molten material (e.g., in a trailing edge of the body 246). In the example of FIGS. 2-7, the openings 260 are defined in the second edge 250 of the body 246. The number, shape, location, and profile of the openings 260 and/or the supply passageway 258 should not be considered limiting. For example, in other cases, each opening 260 may have a dedicated supply passageway 258 rather than having a common supply passageway 258 for the openings 260. The supply passageway 258 may be in fluid communication with an injectable material source 262 such that an injectable material, including but not limited to salt, may be selectively supplied into the molten material via the supply passageway 258 and the openings 260. In examples with a plurality of mixers 212, all of the mixers 212 may include the supply passageway 258 and the openings 260 or a subset of the mixers 212 may include the supply passageway 258 and the openings 260. In some non-limiting examples, the injectable material may be supplied to the molten material when the mixers 212 are in the lowered position.

The mixer assembly 210 also includes a dross removal device 244. The dross removal device 244 may be any suitable device or mechanism for removing dross from the molten material in the tank chamber 214. In the example of FIGS. 2-7, the dross removal device 244 is a robotic arm; however, in other examples, the dross removal device 244 may be any other suitable device. A non-limiting example of another dross removal device 244 includes an Archimedes screw type assembly.

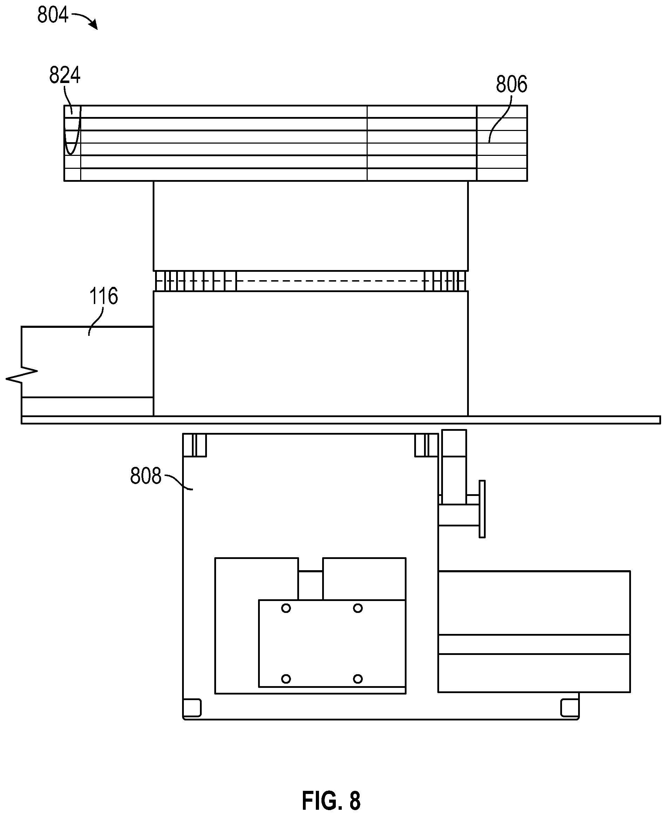

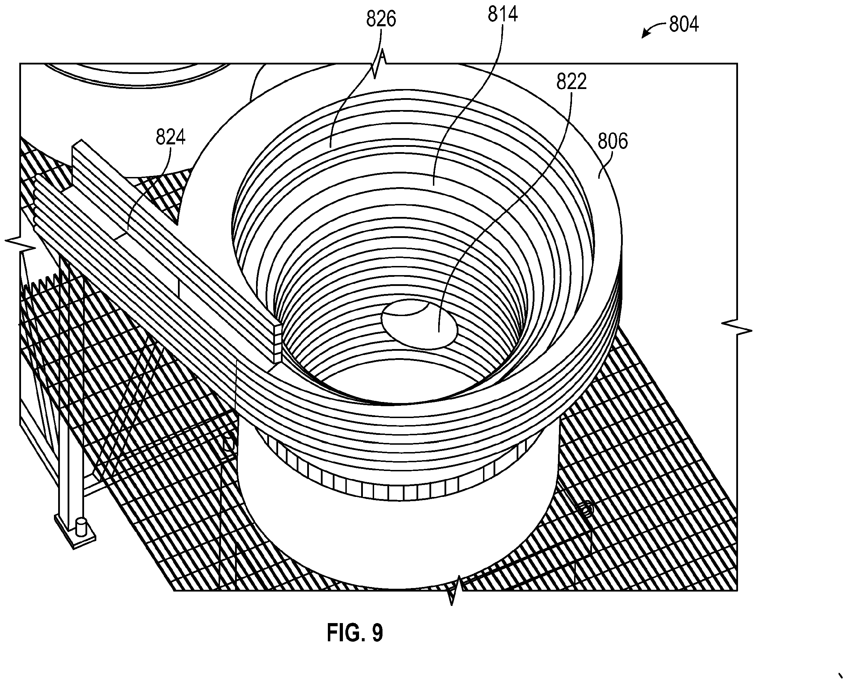

FIGS. 8 and 9 illustrate another example of a portion of a pump system 804 with a tank 806 and a magnetic stirrer 808. Although not illustrated, a mixer assembly similar to the mixer assembly 110 or the mixer assembly 210 may be utilized with the pump system 804.

The tank 806 is substantially similar to the tank 206 except that the supplemental chamber 240 is omitted. As best illustrated in FIG. 9, similar to the tank 206, the profile of a chamber wall 826 of a tank chamber 814 of the tank 806 is non-linear between the portion of the chamber wall 826 proximate to an inlet 822 and the portion of the chamber wall 826 proximate to an outlet 824. Similar to the tank chamber 214 and the tank chamber 114, a transverse dimension of the tank chamber 814 proximate to the inlet 822 is less than the transverse dimension of the tank chamber 814 proximate to the outlet 824 such that the chamber wall 826 narrows from the top of the tank chamber 814 toward the bottom of the tank chamber 814.

Similar to the pump system 104 and the pump system 204, the magnetic stirrer 808 of the pump system 804 includes one or more permanent magnets rotatable about an axis, and the magnetic stirrer 808 is positioned below the tank 806 such that a moving magnetic field generated by the rotating permanent magnet induces movement in the molten material in the tank chamber 814 of the tank 806.

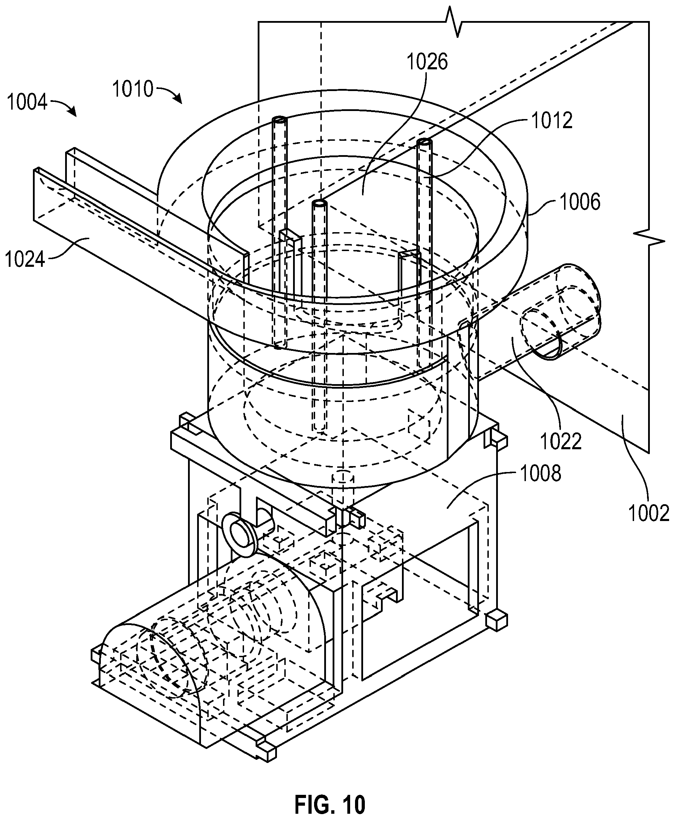

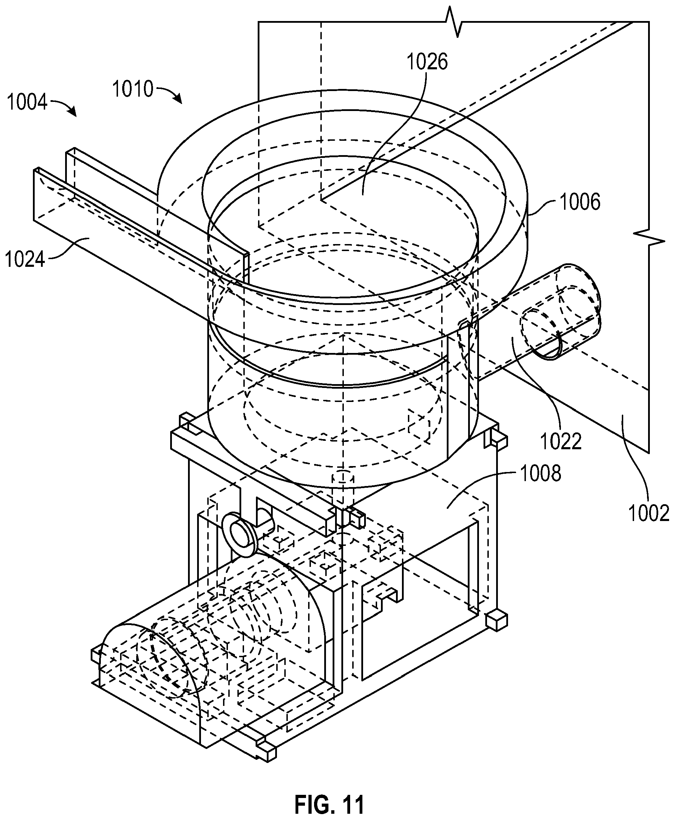

FIGS. 10 and 11 illustrate another example of a pump system 1004 with a tank 1006, magnetic stirrer 1008, and mixer assembly 1010 (omitted from FIG. 11). The pump system 1004 is in fluid communication with a furnace 1002. The tank 1006 is similar to the previously mentioned tanks and includes a chamber wall 1026 having a profile that is non-linear between the portion of the chamber wall 1026 proximate to an inlet 1022 and the portion of the chamber wall 1026 proximate to an outlet 1024. A transverse dimension of the tank chamber 1014 proximate to the inlet 1022 is less than the transverse dimension of the tank chamber 1014 proximate to the outlet 1024 such that the chamber wall 1026 narrows from the top of the tank chamber 1014 toward the bottom of the tank chamber 1014. Similar to the mixer assembly 110, the mixer assembly 1010 includes three mixers 1012 and is movable between the raised position and the lowered position such that the mixers 1012 are at least partially within the molten material.

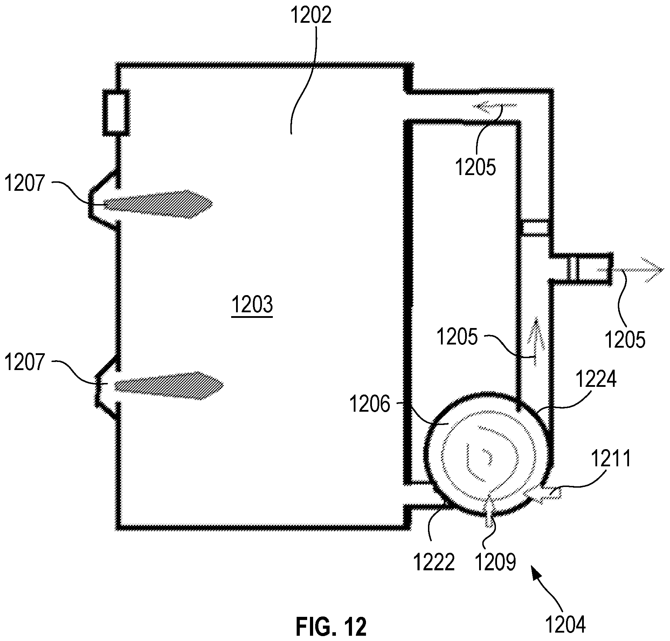

FIG. 12 illustrates an example of a pump system 1204 with a sidewell melting furnace 1202 that includes a main furnace chamber 1203. One or more burners 1207 or other suitable heating elements are provided to produce a molten condition. The pump system 1204 is substantially similar to the previously discussed pump systems and includes a tank 1206 having a chamber wall with a profile that is non-linear between an inlet 1222 and the an outlet 1224. A transverse dimension of the tank chamber proximate to the inlet 1222 is less than the transverse dimension of the tank chamber proximate to the outlet 1224 such that the chamber wall narrows from the top of the tank chamber toward the bottom of the tank chamber. Although not illustrated in FIG. 12, the pump system 1204 also includes a magnetic stirrer and a mixer assembly. A flow of molten material is represented by arrows 1205, and the flow path may be from the main furnace chamber 1203, to the tank 1206, and either back to the main furnace chamber 1203 or for further processing. As illustrated in FIG. 12, various materials such as metal scrap (represented by arrow 1211) and/or injectable materials (represented by arrow 1209) may be added during the melting process. Compared to existing sidewell melting furnaces, the sidewell melting furnace 1202 with the pump system 1204 may promote better submergence of the scrap 1211 because of the vortex generated in the tank 1206, which may lead to scrap submerged inside the melt and not on the melt surface. Salt or other injectable materials 1209 are similarly better submerged below the melt surface and mixed, which may minimize salt loss entrapment on the melt surface and lead to lower salt consumption. Drain plugs may optionally be omitted because of the improved mixing and pumping of molten material with the tank 1206.

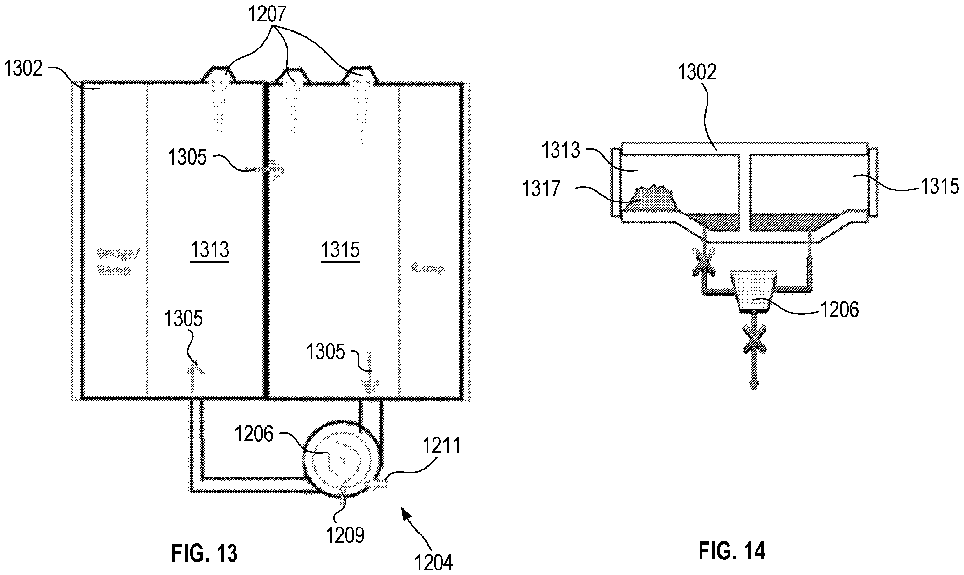

FIGS. 13 and 14 illustrate an example of the pump system 1204 with a dual chamber furnace 1302 that includes a scrap chamber 1313 and a heating chamber 1315. Metal scrap 1317 (see FIG. 14) may be introduced into the scrap chamber 1313 (in addition to the metal scrap 1211). A flow of molten material is represented by arrows 1305, and the flow path may be from the scrap chamber 1313, to the heating chamber 1315, to the tank 1206, and back to the scrap chamber 1313. Compared to existing dual chamber furnaces, the dual chamber furnace 1302 with the pump system 1204 may promote better submergence of the scrap 1211 and/or other injectable materials 1209. The dual chamber furnace 1302 may also be more easily cleaned compared to existing dual chamber furnaces because the pump system 1204 may be an open system and components are more easily accessible.

Referring back to FIG. 1, a method of processing molten material with the pump system 104 is also provided. While reference will be made to the pump system 104, it will be appreciated that the following description is equally applicable to the pump system 204 and the pump system 804, or other pump systems, unless expressly noted otherwise.

The method may include receiving the molten material from the furnace 102 in the tank chamber 114 of the tank 106. Receiving the molten material may optionally include drawing the molten material from the furnace 102, through the inlet conduit 116 and the inlet 122, and into the tank chamber 114 by rotating the permanent magnet 120 of the magnetic stirrer 108 such that a rotational or mixing flow is generated within the tank chamber 114.

In various examples, the method includes controlling the flow of the molten material through the tank chamber 114 from the inlet 122 to the outlet 124. In various aspects, controlling the flow of molten material may include, but is not limited to, controlling one or more of a rotational speed of the permanent magnet 120, an axis of rotation of the permanent magnet, a number of permanent magnets, and/or a profile of the chamber wall 126 of the tank chamber 114. In some cases, the profile of the chamber wall 126 is controlled such that the transverse dimension of the tank chamber 114 proximate to the inlet 122 is less than the transverse dimension of the tank chamber 114 proximate to the outlet 124.

In some optional examples, the method includes controlling the flow of the molten material by controlling the magnetic stirrer 108 such that a collection point is formed in a top surface of the molten material within the tank chamber 114 for dross and facilitate removal of dross. The method may include using a dross removal device to remove the dross from the molten material before it is pumped out the outlet 124.

In various examples, the method may include lowering one or more mixers 112 of the mixer assembly 110 from the raised position to the lowered position such that the mixers 112 are at least partially within the molten material. In certain aspects, the method includes substantially maintaining a position of the mixers 112 relative to the tank chamber 114 (e.g., the mixers 112 are stationary within the tank chamber 114).

In certain examples, an edge of a body of each mixer 112 may include one or more fins, and the one or more fins positioned within the molten material may generate turbulence and/or a supplemental mixing flow (in addition to the flow generated by the magnetic stirrer 108) within the molten material. Optionally, the method may include controlling the supplemental mixing flow generated by the fins of the mixers 112 by controlling one or more of the number of fins on the mixer 112, the profile or pattern of the fins, the number of mixers 112 with the mixer assembly 110, the angle of the mixer 112 relative to the vertical axis 130 of the tank chamber 114, or the orientation of the edge with the fins 1 relative to the vertical axis 130, or other features of the mixer assembly 110.

In some examples, the method may include adding scrap material to the molten material in the tank chamber 114 while the mixers 112 are in the lowered position. In various examples, the method may include injecting an injectable material (such as, but not limited to, salt) into the molten material while the mixers 112 are in the lowered position. In certain aspects, injecting the injectable material may include supplying the injectable material to the supply passageway defined in the body of each mixer 112 and directing the injectable material through the supply passageway and out the one or more openings defined in the body of each mixer 112. In various cases, injecting the injectable material may include controlling at least one of the type of injectable material injected into the molten material, a flow or supply rate of the injectable material, a number of openings defined in the body of each mixer 112, or other features of the mixer assembly 110. In certain aspects, the method may include raising the mixer assembly 110 from the lowered position to the raised position after adding the scrap material and/or after injecting the injectable material.

## Claims

1. A pump system (204, 804, 1004, 1204) for a metal furnace (102), the pump system (204, 804, 1004, 1204) comprising:
a tank (206, 806, 1006, 1206) comprising a tank chamber (214, 814, 1014) configured to receive a molten material; and
a magnetic stirrer (208, 808, 1008) comprising a rotating permanent magnet (120), wherein the tank (206, 806, 1006, 1206) is positioned above magnetic stirrer (208, 808, 1008) and such that the magnetic stirrer (208, 808, 1008) is outside of the tank chamber (214, 814, 1014), and wherein the magnetic stirrer (208, 808, 1008) is configured to generate a moving magnetic field in the molten material in the tank chamber (214, 814, 1014) to induce movement in the molten material,
an inlet (222, 822, 1022, 1222) in fluid communication with the tank chamber (214, 814, 1014) and defining a flow path to the tank chamber (214, 814, 1014) for molten material entering the tank chamber (214, 814, 1014); and
an outlet (224, 824, 1024, 1224) in fluid communication with the tank chamber (214, 814, 1014) and defining a flow path from the tank chamber (214, 814, 1014) for molten material exiting the tank chamber (214, 814, 1014),
wherein a transverse dimension of the tank chamber (214, 814, 1014) proximate to the inlet (222, 822, 1022, 1222) is different from the transverse dimension of the tank chamber (214, 814, 1014) proximate to the outlet, wherein the transverse dimension of the tank chamber (214, 814, 1014) is the dimension across a widest portion of the tank chamber (214, 814, 1014),
wherein a surface of the tank chamber (214, 814, 1014) comprises a non-linear curve between the inlet (222, 822, 1022, 1222) and the outlet (224, 824, 1024, 1224),
**characterized in that**
the pump system further comprises a mixer (112, 212, 1012), selectively positionable within and removable from the tank chamber, wherein the mixer (212, 1012) comprises a body (246), and wherein the body (246) comprises one or more fins (256) along an edge of the body (246),
wherein the mixer (112, 212, 1012) is movable between a lowered position and a raised position, wherein in the lowered position, the mixer is positioned at least partially within the tank chamber (114, 214, 814, 1014) and/or at least partially within the molten material within the tank chamber (114, 214, 814, 1014), and, in the raised position, the mixer is positioned above the molten material within the tank chamber (114, 214, 814, 1014) and/or outside of the tank chamber (114, 214, 814, 1014).

2. The pump system of claim 1,
wherein a vertical position of the inlet (222, 822, 1022, 1222) is lower than a vertical position of the outlet (224, 824, 1024, 1224), or
wherein the transverse dimension of the tank chamber (214, 814, 1014) proximate to the inlet (222, 822, 1022, 1222) is less than the transverse dimension of the tank chamber (214, 814, 1014) proximate to the outlet (224, 824, 1024, 1224).

3. The pump system (104, 204, 804, 1004, 1204) according to claim 1, the body (246) defining a supply passageway having at least one opening along a vertical edge (250) of the body (246), wherein the mixer is configured to selectively supply an injectable material into the tank chamber via the supply passageway and the at least one opening.

4. A method comprising:
receiving, from a furnace (102), molten material in a tank chamber (114, 214, 814, 1014) of a tank (106, 206, 806, 1006, 1206) of a pump system (104, 204, 804, 1004, 1204) according to any of the preceding claims;
generating a mixing flow in the molten material in the tank chamber (114, 214, 814, 1014), wherein generating the mixing flow comprises:
rotating a permanent magnet (120) of a magnetic stirrer (108, 208, 808, 1008) of the pump system to generate a moving magnetic field in the molten material in the tank chamber (114, 214, 814, 1014); and
controlling, by the magnetic stirrer (108, 208, 808, 1008), the moving magnetic field to induce movement in the molten material, wherein the tank (106, 206, 806, 1006, 1206) is positioned above magnetic stirrer such that the magnetic stirrer is outside of the tank chamber (114, 214, 814, 1014); and
discharging the molten material from the tank.

5. The method of claim 4, further comprising removing dross from the molten material in the tank chamber (114, 214, 814, 1014) while generating the mixing flow in the molten material, or
wherein the mixing flow is a secondary mixing flow, and wherein the method further comprises:
generating a primary mixing flow in the molten material by lowering a mixer (112, 212, 1012) into the tank chamber (114, 214, 814, 1014) and at least partially into the molten material, wherein the mixer comprises a body (246), the body (246) comprising an edge extending along a length of the mixer, wherein the edge comprises one or more fins,
wherein the method preferably further comprises adding scrap material into the tank chamber (114, 214, 814, 1014) while generating the primary mixing flow.

6. The method of claim 4, further comprising injecting an injectable material into the molten material while generating the mixing flow by:
lowering a mixer (112, 212, 1012) into the tank chamber (114, 214, 814, 1014) and at least partially into the molten material, wherein the mixer (112, 212, 1012) comprises a body (246), the body (246) comprising a supply passageway (258) extending at least partially through the body (246) and comprising at least one opening (260) defined in an edge (250) of the body (246); and
injecting the injectable material through the supply passage (258), out the at least one opening (260), and into the molten material.

## Patentansprüche

1. Pumpsystem (204, 804, 1004, 1204) für einen Metallofen (102), wobei das Pumpsystem (204, 804, 1004, 1204) umfasst:
einen Behälter (206, 806, 1006, 1206), umfassend eine Behälterkammer (214, 814, 1014), welche dazu eingerichtet ist, ein geschmolzenes Material aufzunehmen; und
eine magnetische Rührvorrichtung (208, 808, 1008), welche einen rotierenden Permanentmagneten (120) umfasst, wobei der Behälter (206, 806, 1006, 1206) oberhalb der magnetischen Rührvorrichtung (208, 808, 1008) positioniert ist und derart, dass die magnetische Rührvorrichtung (208, 808, 1008) außerhalb der Behälterkammer (214, 814, 1014) ist, und wobei die magnetische Rührvorrichtung (208, 808, 1008) dazu eingerichtet ist, ein sich bewegendes Magnetfeld in dem geschmolzenen Material in der Behälterkammer (214, 814, 1014) zu erzeugen, um eine Bewegung in dem geschmolzenen Material zu induzieren,
einen Einlass (222, 822, 1022, 1222), welcher in Fluidkommunikation mit der Behälterkammer (214, 814, 1014) steht und einen Strömungspfad zu der Behälterkammer (214, 814, 1014) für geschmolzenes Material definiert, welches in die Behälterkammer (214, 814, 1014) eintritt; und
einen Auslass (224, 824, 1024, 1224), welcher in Fluidkommunikation mit der Behälterkammer (214, 814, 1014) steht und einen Strömungspfad von der Behälterkammer (214, 814, 1014) für geschmolzenes Material definiert, welches aus der Behälterkammer (214, 814, 1014) austritt,
wobei sich eine transversale Abmessung der Behälterkammer (214, 814, 1014) in der Nähe des Einlasses (222, 822, 1022, 1222) von der transversalen Abmessung der Behälterkammer (214, 814, 1014) in der Nähe des Auslasses unterscheidet, wobei die transversale Abmessung der Behälterkammer (214, 814, 1014) die Abmessung über einen weitesten Abschnitt der Behälterkammer (214, 814, 1014) ist,
wobei eine Fläche der Behälterkammer (214, 814, 1014) einen nicht-lineare Krümmung zwischen dem Einlass (222, 822, 1022, 1222) und dem Auslass (224, 824, 1024, 1224) umfasst,
**dadurch gekennzeichnet, dass**
das Pumpsystem ferner eine Mischvorrichtung (112, 212, 1012) umfasst, welche selektiv innerhalb der Behälterkammer positionierbar und aus dieser entfernbar ist,
wobei die Mischvorrichtung (212, 1012) einen Körper (246) umfasst, wobei der Körper (246) eine oder mehrere Finnen (256) entlang eines Randes des Körpers (246) umfasst,
wobei die Mischvorrichtung (112, 212, 1012) zwischen einer abgesenkten Position und einer angehobenen Position bewegbar ist, wobei, in der abgesenkten Position, die Mischvorrichtung wenigstens teilweise innerhalb der Behälterkammer (114, 214, 814, 1014) und/oder wenigstens teilweise innerhalb des geschmolzenen Materials innerhalb der Behälterkammer (114, 214, 814, 1014) positioniert ist, und, in der angehobenen Position, die Mischvorrichtung oberhalb des geschmolzenen Materials innerhalb der Behälterkammer (114, 214, 814, 1014) und/oder außerhalb der Behälterkammer (114, 214, 814, 1014) positioniert ist.

2. Pumpsystem nach Anspruch 1,
wobei eine vertikale Position des Einlasses (222, 822, 1022, 1222) niedriger als eine vertikale Position des Auslasses (224, 824, 1024, 1224) ist, oder
wobei die transversale Abmessung der Behälterkammer (214, 814, 1014) in der Nähe des Einlasses (222, 822, 1022, 1222) geringer als die transversale Abmessung der Behälterkammer (214, 814, 1014) in der Nähe des Auslasses (224, 824, 1024, 1224) ist.

3. Pumpsystem (104, 204, 804, 1004, 1204) nach Anspruch 1, wobei der Körper (246) einen Zuführdurchgang definiert, welcher wenigstens eine Öffnung entlang eines vertikalen Randes (250) des Körpers (246) aufweist, wobei die Mischvorrichtung dazu eingerichtet ist, selektiv ein injizierbares Material über den Zuführdurchgang und die wenigstens eine Öffnung in die Behälterkammer zuzuführen.

4. Verfahren, umfassend:
Aufnehmen, von einem Ofen (102), von geschmolzenem Material in einer Behälterkammer (114, 214, 814, 1014) eines Behälters (106, 206, 806, 1006, 1206) eines Pumpsystems (104, 204, 804, 1004, 1204) nach einem der vorhergehenden Ansprüche;
Erzeugen einer Mischströmung in dem geschmolzenen Material in der Behälterkammer (114, 214, 814, 1014),
wobei das Erzeugen der Mischströmung umfasst:
Rotieren eines Permanentmagneten (120) einer magnetischen Rührvorrichtung (108, 208, 808, 1008) des Pumpsystems, um ein sich bewegendes Magnetfeld in dem geschmolzenen Material in der Behälterkammer (114, 214, 814, 1014) zu erzeugen; und
Steuern, durch die magnetische Rührvorrichtung (108, 208, 808, 1008), des sich bewegenden Magnetfelds, um eine Bewegung in dem geschmolzenen Material zu induzieren, wobei der Behälter (106, 206, 806, 1006, 1206) oberhalb der magnetischen Rührvorrichtung derart positioniert ist, dass die magnetische Rührvorrichtung außerhalb der Behälterkammer (114, 214, 814, 1014) ist; und
Abgeben des geschmolzenen Materials aus dem Behälter.

5. Verfahren nach Anspruch 4, ferner umfassend Entfernen von Schlacke aus dem geschmolzenen Material in der Behälterkammer (114, 214, 814, 1014), während die Mischströmung in dem geschmolzenen Material erzeugt wird, oder
wobei die Mischströmung eine sekundäre Mischströmung ist und wobei das Verfahren ferner umfasst:
Erzeugen einer primären Mischströmung in dem geschmolzenen Material durch Absenken einer Mischvorrichtung (112, 212, 1012) in die Behälterkammer (114, 214, 814, 1014) und wenigstens teilweise in das geschmolzene Material, wobei die Mischvorrichtung einen Körper (246) umfasst, wobei der Körper (246) einen Rand umfasst, welcher sich entlang einer Länge der Mischvorrichtung erstreckt, wobei der Rand eine oder mehrere Finnen umfasst,
wobei das Verfahren vorzugsweise ferner ein Hinzufügen von Schrottmaterial in die Behälterkammer (114, 214, 814, 1014) während des Erzeugens der primären Mischströmung umfasst.

6. Verfahren nach Anspruch 4, ferner umfassend Injizieren eines injizierbaren Materials in das geschmolzene Material, während die Mischströmung erzeugt wird, durch:
Absenken einer Mischvorrichtung (112, 212, 1012) in die Behälterkammer (114, 214, 814, 1014) und wenigstens teilweise in das geschmolzene Material, wobei die Mischvorrichtung (112, 212, 1012) einen Körper (246) umfasst, wobei der Körper (246) einen Zuführdurchgang (258) umfasst, welcher sich wenigstens teilweise durch den Körper (246) erstreckt und wenigstens eine Öffnung (260) umfasst, welche in einem Rand (250) des Körpers (246) definiert ist; und
Injizieren des injizierbaren Materials durch den Zuführdurchgang (258) aus der wenigstens einen Öffnung (260) heraus und in das geschmolzene Material.

## Revendications

1. Système de pompe (204, 804, 1004, 1204) pour un four à métal (102), le système de pompe (204, 804, 1004, 1204) comprenant:
un réservoir (206, 806, 1006, 1206) comprenant une chambre de réservoir (214, 814, 1014) configurée pour recevoir un matériau fondu; et
un agitateur magnétique (208, 808, 1008) comprenant un aimant permanent rotatif (120), dans lequel le réservoir (206, 806, 1006, 1206) est positionné au-dessus de l'agitateur magnétique (208, 808, 1008) et de telle sorte que l'agitateur magnétique (208, 808, 1008) est à l'extérieur de la chambre de réservoir (214, 814, 1014), et dans lequel l'agitateur magnétique (208, 808, 1008) est configuré pour produire un champ magnétique mobile dans le matériau fondu dans la chambre de réservoir (214, 814, 1014) pour induire un mouvement dans le matériau fondu,
une entrée (222, 822, 1022, 1222) en communication fluidique avec la chambre de réservoir (214, 814, 1014) et définissant un trajet d'écoulement vers la chambre de réservoir (214, 814, 1014) pour le matériau fondu entrant dans la chambre de réservoir (214, 814, 1014); et
une sortie (224, 824, 1024, 1224) en communication fluidique avec la chambre de réservoir (214, 814, 1014) et définissant un chemin de passage à partir de la chambre de réservoir (214, 814, 1014) pour le matériau fondu sortant de la chambre de réservoir (214, 814, 1014),
dans lequel une dimension transversale de la chambre de réservoir (214, 814, 1014) à proximité de l'entrée (222, 822, 1022, 1222) est différente de la dimension transversale de la chambre de réservoir (214, 814, 1014) à proximité de la sortie, dans lequel la dimension transversale de la chambre de réservoir (214, 814, 1014) est la dimension à travers une partie la plus large de la chambre de réservoir (214, 814, 1014),
dans lequel une surface de la chambre de réservoir (214, 814, 1014) comprend une courbe non linéaire entre l'entrée (222, 822, 1022, 1222) et la sortie (224, 824, 1024, 1224),
**caractérisé en ce que**
le système de pompe comprend en outre un mélangeur (112, 212, 1012), pouvant être positionné à l'intérieur et retiré sélectivement de la chambre de réservoir, dans lequel le mélangeur (212, 1012) comprend un corps (246), et dans lequel le corps (246) comprend une ou plusieurs ailettes (256) le long d'un bord du corps (246),
dans lequel le mélangeur (112, 212, 1012) est mobile entre une position abaissée et une position relevée, dans lequel dans la position abaissée, le mélangeur est positionné au moins partiellement à l'intérieur de la chambre de réservoir (114, 214, 814, 1014) et/ou au moins partiellement à l'intérieur du matériau fondu à l'intérieur de la chambre de réservoir (114, 214, 814, 1014), et, dans la position relevée, le mélangeur est positionné au-dessus du matériau fondu à l'intérieur de la chambre de réservoir (114, 214, 814, 1014) et/ou à l'extérieur de la chambre de réservoir (114, 214, 814, 1014).

2. Système de pompe selon la revendication 1,
dans lequel une position verticale de l'entrée (222, 822, 1022, 1222) est plus basse qu'une position verticale de la sortie (224, 824, 1024, 1224), ou
dans lequel la dimension transversale de la chambre de réservoir (214, 814, 1014) à proximité de l'entrée (222, 822, 1022, 1222) est inférieure à la dimension transversale de la chambre de réservoir (214, 814, 1014) à proximité de la sortie (224, 824, 1024, 1224).

3. Système de pompe (104, 204, 804, 1004, 1204) selon la revendication 1, le corps (246) définissant un passage d'apport ayant au moins une ouverture le long d'un bord vertical (250) du corps (246), dans lequel le mélangeur est configuré pour apporter sélectivement un matériau injectable dans la chambre de réservoir par l'intermédiaire du passage d'apport et de la au moins une ouverture.

4. Procédé comprenant:
la réception, à partir d'un four (102), d'un matériau fondu dans une chambre de réservoir (114, 214, 814, 1014) d'un réservoir (106, 206, 806, 1006, 1206) d'un système de pompe (104, 204, 804, 1004, 1204) selon l'une quelconque des revendications précédentes;
la formation d'un flux de mélange dans le matériau fondu dans la chambre de réservoir (114, 214, 814, 1014),
dans lequel la formation du flux de mélange comprend:
la rotation d'un aimant permanent (120) d'un agitateur magnétique (108, 208, 808, 1008) du système de pompe pour produire un champ magnétique mobile dans le matériau fondu dans la chambre de réservoir (114, 214, 814, 1014); et
la régulation, par l'agitateur magnétique (108, 208, 808, 1008), du champ magnétique mobile pour induire un mouvement dans le matériau fondu, dans lequel le réservoir (106, 206, 806, 1006, 1206) est positionné au-dessus de l'agitateur magnétique de telle sorte que l'agitateur magnétique est à l'extérieur de la chambre de réservoir (114, 214, 814, 1014); et
l'évacuation du matériau fondu du réservoir.

5. Procédé selon la revendication 4, comprenant en outre l'élimination des scories du matériau fondu dans la chambre de réservoir (114, 214, 814, 1014) tout en produisant le flux de mélange dans le matériau fondu, ou
dans lequel le flux de mélange est un flux de mélange secondaire, et dans lequel le procédé comprend en outre:
la production d'un flux de mélange primaire dans le matériau fondu par abaissement d'un mélangeur (112, 212, 1012) dans la chambre de réservoir (114, 214, 814, 1014) et au moins partiellement dans le matériau fondu, dans lequel le mélangeur comprend un corps (246), le corps (246) comprenant un bord s'étendant le long d'une longueur du mélangeur, dans lequel le bord comprend une ou plusieurs ailettes,
dans lequel le procédé comprend en outre de préférence l'ajout de matériau de rebut dans la chambre de réservoir (114, 214, 814, 1014) tout en produisant le flux de mélange primaire.

6. Procédé selon la revendication 4, comprenant en outre l'injection d'un matériau injectable dans le matériau fondu tout en produisant le flux de mélange par:
abaissement d'un mélangeur (112, 212, 1012) dans la chambre de réservoir (114, 214, 814, 1014) et au moins partiellement dans le matériau fondu, dans lequel le mélangeur (112, 212, 1012) comprend un corps (246), le corps (246) comprenant un passage d'apport (258) s'étendant au moins partiellement à travers le corps (246) et comprenant au moins une ouverture (260) définie dans un bord (250) du corps (246); et
injection du matériau injectable à travers le passage d'apport (258), hors de la au moins une ouverture (260), et dans le matériau fondu.
